# EUROPEAN PATENT SPECIFICATION

(11) **EP 3 939 783 B1**
(45) Date of publication and mention of the grant of the patent: **03.01.2024**
(21) Application number: 20770599.7
(22) Date of filing: 06.03.2020
(51) Int. Cl.: H01B 3/02, C23C 28/00, C23C 28/04, G01L 7/08, G01L 9/00, G01L 19/06

(54) **INSULATING FILM-EQUIPPED METAL MATERIAL AND PRESSURE SENSOR**
MIT ISOLIERENDEM MATERIAL VERSEHENES METALLMATERIAL UND DRUCKSENSOR
MATÉRIAU MÉTALLIQUE ÉQUIPÉ D'UN FILM ISOLANT ET CAPTEUR DE PRESSION

(30) Priority: 13.03.2019 JP 2019046404
(43) Date of publication of application: 19.01.2022
(73) Proprietor: TDK Corporation, Tokyo 103-6128 (JP)
(72) Inventor: KOBAYASHI, Masanori, Tokyo 103-6128 (JP); UNNO, Ken, Tokyo 103-6128 (JP)
(74) Representative: Epping - Hermann - Fischer
(86) International application number: PCT/JP2020/009675
(87) International publication number: WO 2020/184435

(56) References cited:
- WO-A1-89/00763
- WO-A1-2007/114443
- WO-A1-2010/146821
- WO-A1-2011/126076
- CN-A- 102 378 482
- JP-A- 2004 179 542
- JP-A- 2007 071 594
- JP-A- 2007 173 208
- JP-A- 2018 037 605
- US-A1- 2002 034 650
- US-A1- 2004 200 636
- US-A1- 2007 181 043
- US-A1- 2016 069 765
- US-A1- 2019 234 815

## Description

### Technical Field

The present invention relates to a metal material having an insulating film on its surface and a pressure sensor using the same.

### Background

In the fields of pressure sensors, pressure transducers, and the like, there is a known one in which a detection circuit is disposed on an insulating film formed on the surface of a base material made of metal or so. As the detection circuit, for example, there is one utilizing the piezoresistive effect to detect strain of a bottom wall portion (also referred to as a membrane or a diaphragm) of the stem by resistance change. In such a pressure sensor, the insulating film secures insulating properties between the stem and the detection circuit, and an appropriate pressure detection is thereby achieved by the detection circuit.

Since fine irregularities are formed on the surface of the metal material, however, cracking or peeling may occur in the thin insulating film, and the insulating property of the detection circuit may have a problem. Moreover, since the thin film is formed while tracing the shape of the metal surface, irregularities also remain on the surface of the insulating film, and problems may occur in forming the detection circuit or the like on the insulating film.

As a technique of forming the insulating film on the surface with fine irregularities, for example, a technique of etching a protruding portion after film formation (see Patent Document 1) is disclosed. However, such a technique is effective when irregularities are covered with a conductor pattern in which the position of irregularities is known in advance, but is hard to apply to the insulating film formed on the surface of the metal material in which the position of irregularities is hard to know in advance.

As another technique of forming a flat insulating film on a surface with fine irregularities, for example, a technique referred to as spin-on glass (SOG) (see Patent Document 2) is also disclosed. However, the glass insulating film formed by such a technique has a problem of generation of peeling or cracking due to lack of flexibility. Moreover, a technique of forming an insulating film on a metal surface using a coating composition containing a low-viscosity smectite clay mineral, a water-soluble organic solvent, and a surfactant is disclosed (see Patent Document 3), but such an insulating film has a problem in insulating property in a high humidity environment.

### Prior Arts

### Patent Document

Patent Document 1: JPH04237911 (A)
Patent Document 2: JPH03254143 (A)
Patent Document 3: JP2016164215 (A)

Furthermore, document US 2004/200636 A1 describes an enameled wire capable of improving withstand lifetime with respect to the application of surge voltage of an inverter and thermal degradation thereof while restricting an amount of an inorganic filler material is provided. The enameled wire comprises a coating formed of a high molecular compound uniformly mixed with an inorganic filler material in the form of fine flat particles.

Document WO 89/00763 A1 refers to a mineral comprising a chemically delaminated weathered mica having a principal X-ray reflection at approximately 10 Angstroms characteristic of the mica basal spacing. It may be used in the production of paints and coatings, or for electrophoretic deposition onto a metallic surface e.g. a wire conductor, in order to provide a high temperature insulation. **Summary of Invention**

### Problems to be solved by Invention

The present invention has been achieved under such circumstances and provides an insulating film-equipped metal material preventing cracking and film peeling and including an insulating film with good moisture resistance and a pressure sensor using the same.

### Means for solving the Problem

To solve the above object, an insulating film-equipped metal material according to the present invention comprises:
a metal material; and
an insulating film covering at least a part of a surface of the metal material,
wherein the insulating film includes:
an insulating first layer directly disposed on the surface of the metal material and formed of a coating film containing a clay mineral; and
a second layer disposed on the surface of the metal material so as to at least partly overlap with a surface of the first layer and having insulating property and moisture resistance greater than those of the first layer.

In the insulating film-equipped metal material according to the present invention, the first layer of the insulating film disposed on the surface of the metal material with irregularities is composed of a coating film containing a clay mineral. Such a first layer can form a flat layer by filling fine irregularities on the surface of the metal material and prevents the occurrence of cracking and film peeling with excellent adhesion to the metal surface. Since the second layer disposed so as to overlap with the surface of the first layer has insulating property and moisture resistance greater than those the first layer, the second layer prevents deterioration in insulating property of the first layer in a high humidity environment and maintains the insulating property of the insulating film. Thus, the insulating film of the insulating film-equipped metal material including the insulating film having such a double-layer structure is prevented from causing cracking and film peeling and exhibits good moisture resistance.

For example, the clay mineral may be smectite.

The clay mineral contained in the first layer is not limited, but when the clay mineral is smectite, the first layer exhibits particularly favorable heat resistance.

In one embodiment according to the invention the second layer is a layer containing at least one selected from a silicon based oxide, an aluminum based oxide, a zirconium based oxide, a magnesium based oxide, a calcium based oxide, a titanium based oxide, a hafnium based oxide, a silicon based nitride, a silicon based oxynitride, and a silicon based carbide.

When the insulating film-equipped metal material includes such a second layer, it is possible to favorably prevent changes in the characteristics of the insulating film in a high temperature environment, and such an insulating film-equipped metal material has excellent heat resistance.

For example, the second layer may be a layer containing at least one selected from a polyimide resin, an epoxy resin, and a phenol resin.

When the insulating film-equipped metal material includes such a second layer, the flexibility of the insulating film is improved, and the occurrence of cracking in the insulating film can thereby more favorably be prevented.

In one embodiment according to the invention the metal material is an alloy steel containing at least one selected from chromium and nickel.

For example, the metal material may be an alloy steel containing 15-25% of chromium and 3-15% of nickel.

When the metal material is such an alloy steel, the mechanical strength can be improved, and the corrosion resistance can further be enhanced with the amount of chromium and nickel in a predetermined range.

A pressure sensor according to the present invention comprises:
the insulating film-equipped metal material according to any one of the above; and
a detection circuit disposed to the metal material so as to overlap with a surface of the insulating film,
wherein a surface of the metal material opposite to the side where the detection circuit is disposed is a pressure receiving surface for receiving pressure of fluid to be detected.

Since such a pressure sensor prevents generation of cracking and film peeling of the insulating film insulating between the detection circuit and the metal material and thereby has favorable durability and reliability.

### Brief Description of the Drawings

FIG. 1 is a schematic cross-sectional view of a pressure sensor using an insulating film-equipped metal material according to an embodiment of the present invention;
FIG. 2 is a schematic cross-sectional view of the insulating film-equipped metal material in the pressure sensor shown in FIG. 1;
FIG. 3 is a schematic view of an insulating film-equipped metal material in a pressure sensor according to Second Embodiment of the present invention; and
FIG. 4 is a schematic view of an insulating film-equipped metal material in a pressure sensor according to Third Embodiment of the present invention.

### Detailed Description of Invention

Hereinafter, the present invention is described based on the embodiments shown in the figures.

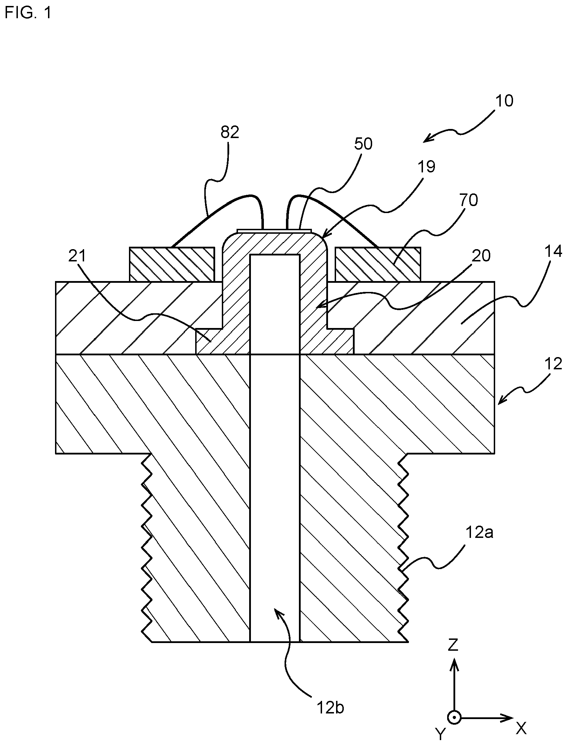

FIG. 1 is a schematic cross-sectional view of a pressure sensor 10 using an insulating film-equipped metal material 19 according to First Embodiment of the present invention. The pressure sensor 10 includes: an insulating film-equipped metal material 19 having a stem 20 as a metal material; a connection member 12 provided with a passage 12b for transmitting pressure to the stem 20; and a holding member 14 for fixing the stem 20 to the connection member 12. The pressure sensor 10 further includes: a detection circuit 50 provided on the top of the insulating film-equipped metal material 19; a substrate portion 70 wired to the detection circuit 50 by, for example, a connection wiring 82; and the like.

As shown in FIG. 1, a screw groove 12a for fixing the pressure sensor 10 to a measurement target is formed on the outer periphery of the connection member 12. Since the pressure sensor 10 is fixed by the screw groove 12a, the passage 12b formed inside the connection member 12 airtightly communicates with a pressure chamber filled with fluid as the measurement target.

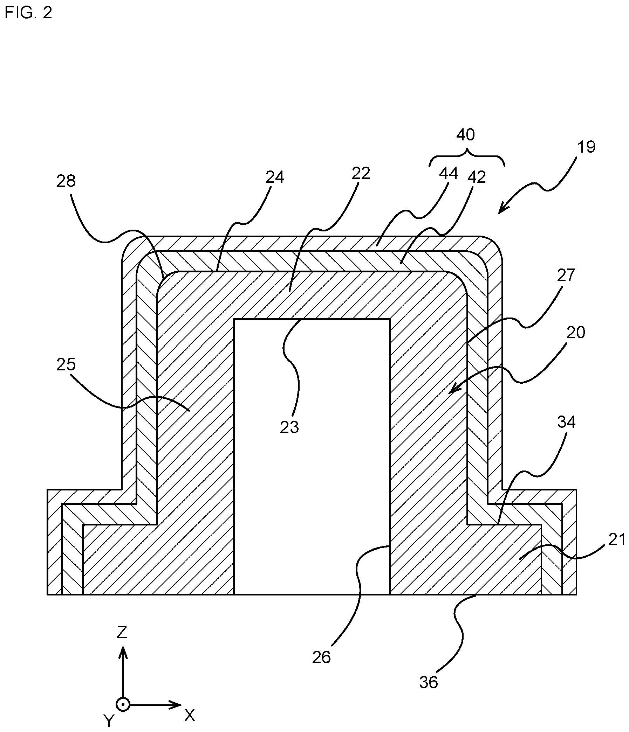

As shown in FIG. 1, the insulating film-equipped metal material 19 has a bottomed (upper bottom) tubular outer shape and is disposed at one end of the passage 12b of the connection member 12. The stem 20 is provided with a flange portion 21 on the opening side (on the negative side in the Z-axis). The insulating film-equipped metal material 19 is fixed to the connection member 12 by sandwiching the flange portion 21 between the holding member 14 and the connection member 12. The opening of the stem 20 and the passage 12b of the connection member 12 are airtightly connected using the holding member 14, and the pressure of fluid to be measured is transmitted to a bottom wall portion 22 of the stem 20 (see FIG. 2).

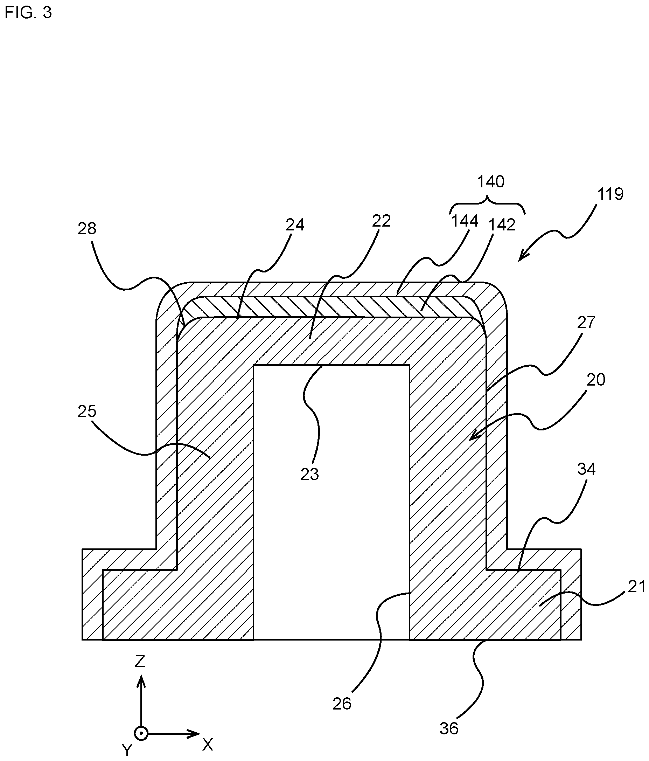

FIG. 2 is an enlarged cross-sectional view of the insulating film-equipped metal material 19 shown in FIG. 1. The insulating film-equipped metal material 19 includes the stem 20 as a metal material and an insulating film 40 covering at least a part of the surface of the stem 20. The stem 20 includes a substantially circular plate-shaped bottom wall portion 22 extending in the XY plane direction (see FIG. 3A) and a substantially cylindrical side wall portion 25 connected to the outer periphery of the bottom wall portion 22 and extending to the negative side in the Z-axis.

Moreover, the stem 20 includes the flange portion 21 protruding in the outer diameter direction at the end of the side wall portion 25 on the negative side in the Z-axis, but the shape of the stem 20 is not limited to one shown in the embodiment and may be, for example, a bottomed cylindrical shape having no flange portion.

The material of the stem 20 is not limited and is, for example, iron-based alloys such as carbon steel and alloy steel and other metals and alloys. From the viewpoint of improving the mechanical strength of the insulating film-equipped metal material 19 and the pressure sensor 10 using the same, the material of the stem 20 is preferably an alloy steel containing at least one alloy element selected from chromium and nickel. In addition to the improvement in mechanical strength, from the viewpoint of improving the corrosion resistance in a high humidity environment, the material of the stem 20 is preferably an alloy steel containing 15-25% of chromium and 3-15% of nickel.

As shown in FIG. 2, the present embodiment is described by exemplifying the pressure sensor 10 using the insulating film-equipped metal material 19, but the application target of the insulating film-equipped metal material 19 is not limited to pressure sensors. For example, the insulating film-equipped metal material 19 can be used for sensors other than pressure sensors, such as strain gauges, torque sensors, and acceleration sensors. The shape of the insulating film-equipped metal material 19 is not limited to the bottomed cylindrical shape as shown in FIG. 1 and FIG. 2 and can be other shapes, such as plate shape, columnar shape, dome shape, and polygonal shape, depending on the application target.

As shown in FIG. 2, the insulating film 40 is formed so as to cover the entire outer surface of the stem 20. The insulating film 40 ensures the insulating property between the stem 20 and the detection circuit 50. In FIG. 2, the insulating film 40 is illustrated thicker than the actual thickness.

As shown in FIG. 2, the insulating film 40 includes a first layer 42 and a second layer 44, both of which have insulating property, and has a multilayer structure (double layer in the embodiment). The first layer 42 of the insulating film 40 is provided directly on the outer surface of the stem 20 and is composed of a coating film containing a clay mineral. The second layer 44 of the insulating film 40 is provided on the outer surface of the stem 20 so as to overlap with the surface of the first layer 42. Other features of the first layer 42 and the second layer 44 are described in detail below.

The insulating film 40 is provided on an outer bottom surface 24, a skirt portion 28, an outer side surface 27, and a stepped surface 34 of the outer surface of the stem 20. The outer bottom surface 24 is an end surface of the stem 20 on its upper side (positive side in the Z-axis direction) and has a circular flat shape. The outer side surface 27 extends in a direction intersecting the outer bottom surface 24. The outer side surface 27 shown in FIG. 3 extends in a direction (Z-axis direction) substantially perpendicular to the extending direction of the outer bottom surface 24 (X-axis and Y-axis directions) and has a cylindrical side surface shape.

The skirt portion 28 is formed so as to surround the outer bottom surface 24. As shown in FIG. 2, the skirt portion 28 is a surface facing a direction different from that of the outer bottom surface 24 and the outer side surface 27 viewing from the Y-direction or the X-direction, which is a direction parallel to the outer bottom surface 24, and connects between the outer bottom surface 24 and the outer side surface 27. In the stem 20 including such a skirt portion 28, it is possible to reduce the stress concentration on the insulating film 40 formed on the skirt portion 28. The detection circuit 50 shown in FIG. 1 can be disposed on the entire outer bottom surface 24 or on a large area of the outer bottom surface 24 of the stem 20 by covering the skirt portion 28 with the insulating film. This contributes to miniaturization of the pressure sensor 10.

As shown in FIG. 2, the inner surface of the stem 20 includes a pressure receiving inner surface 23 and an inner side surface 26. The pressure receiving inner surface 23 is an opposite surface of the outer bottom surface 24 of the bottom wall portion 22 and receives pressure from the fluid to be measured. As with the outer bottom surface 24, the pressure receiving inner surface 23 has a plane shape, but the outer bottom surface 24 is a surface facing the positive side in the Z-axis, and the pressure receiving inner surface 23 is a surface facing the negative side in the Z-axis.

The surface of the bottom wall portion 22 of the stem 20 opposite to the side on which the detection circuit 50 is provided is the pressure receiving inner surface 23 for receiving the pressure of the fluid to be detected. When the pressure receiving inner surface 23 receives pressure from the fluid, the bottom wall portion 22 of the stem 20 is deformed and at least partly functions as a membrane (or diaphragm). The thickness of the bottom wall portion 22 of the stem 20 is determined so as to generate an appropriate deformation under the pressure of the fluid to be measured and can be, for example, smaller than the thickness of the side wall portion 25.

In the pressure sensor 10, as shown in FIG. 2, the detection circuit 50 is provided on the outer bottom surface 24 opposite to the pressure receiving inner surface 23 via the insulating film 40 and detects the deformation of the bottom wall portion 22 and the pressure of the fluid. The detection circuit 50 shown in FIG. 1 is, for example, a circuit that detects the deformation of the bottom wall portion 22 and the pressure of the fluid by utilizing the piezoresistive effect, but is not limited to only this.

The detection circuit 50 is provided on the outer bottom surface 24 of the stem 20 by overlapping with the surface of the insulating film 40. The detection circuit 50 shown in FIG. 1 is formed by, for example, forming a functional film on the insulating film 40 and subjecting the functional film to laser processing or microfabrication by a semiconductor processing technique such as screen printing.

As shown in FIG. 2, the insulating film 40 is provided so as to directly contact with the outer bottom surface 24, the skirt portion 28, the outer side surface 27, and the like, which are the outer surface of the stem 20, and cover them. The insulating film 40 is formed between: the outer surface of the stem 20; and the detection circuit 50 and the functional film. The detection circuit 50 and the functional film are separated by the insulating film 40 and are not contacted with the stem 20.

Among the outer surface of the stem 20, the insulating film 40 is provided so as to cover the entire outer bottom surface 24 and at least a part of the skirt portion 28 connecting between the outer bottom surface 24 and the outer side surface 27. However, the insulating film 40 may cover the whole of the outer bottom surface 24 and the skirt portion 28 and, as shown in FIG. 2, may cover at least a part of the outer side surface 27 and the stepped surface 34 in addition to the outer bottom surface 24 and the skirt portion 28.

The insulating film 40 ensures the insulating property between the stem 20 and the detection circuit 50. In FIG. 2, the insulating film 40 is made of, for example, a thin film, and the thickness of the insulating film 40 is smaller than the wall thickness of the stem 20 or the like.

The first layer 42 of the insulating film 40 is composed of a coating film containing a clay mineral and can be formed by any method, such as spray coating method, spin coating method, dip coating method, screen printing, and roll coating method. Examples of the coating composition used for forming the coating film of the first layer 42 include those containing an inorganic material containing a clay mineral, a water-soluble organic solvent, and a surfactant.

Preferably, the clay mineral contained in the coating film and the coating composition is a smectite clay mineral. Examples of the smectite clay mineral include montmorillonite, hyderite, nontronite, saponite, hectorite, sauconite, and stevensite. Preferably, the smectite clay mineral contained in the coating composition used for the first layer 42 is a low-viscosity smectite clay mineral. The low-viscosity smectite clay mineral does not gel even when dispersed in the aqueous phase, and a low-viscosity sol state is maintained. Preferably, the coating film and the coating composition contain an inorganic binder such as silica sol type, alumina sol type, alkali metal silicate type, and phosphate type.

Examples of the water-soluble organic solvent contained in the coating composition used for the first layer 42 include an alcohol based solvent, a glycol ether based solvent, and a ketone based solvent. The surfactant contained in the coating composition used for the first layer 42 is, for example, a nonionic based surfactant.

Since the first layer 42 composed of a coating film containing such a clay mineral has good adhesion to the outer bottom surface 24 of the stem 20, peeling of the insulating film 40 can favorably be prevented. Since the first layer 42 is composed of a coating film, the coating film fills the fine irregularities on the outer bottom surface 24 of the stem 20, and a smooth surface can be obtained. The first layer 42 containing a smectite clay mineral is excellent in heat resistance.

The second layer 44 is formed so as to overlap with the first layer 42, and the first layer 42 is sandwiched between the second layer 44 and the outer surface of the stem 20. The insulating property and moisture resistance of the second layer 44 are higher than those of the first layer 42. Here, "high moisture resistance" means that the weight change rate of the material (film) after a shelf test in a high humidity environment (temperature: 60°C, humidity: 93%) is small, and "high insulation property" means that the volume resistivity or electrical resistivity is high.

The second layer 44 is a layer containing at least one selected from a silicon based oxide such as silicon oxide, an aluminum based oxide such as alumina, a zirconium based oxide, a magnesium based oxide, a calcium based oxide, a titanium based oxide, a hafnium based oxide, a silicon based nitride such as silicon nitride, a silicon based oxynitride such as silicon oxynitride, and a silicon based carbide. The second layer 44 composed of such a layer can be formed by a thin film forming method, such as sputtering method, vacuum vapor deposition method, vapor phase method like CVD method, and liquid phase method.

For example, the second layer 44 may be a layer containing at least one selected from a polyimide resin, an epoxy resin, and a phenol resin. The second layer 44 composed of such a layer can be formed by, for example, a liquid phase method or a vapor phase method similar to that of the first layer 42 or an application method of a coating composition containing these resins.

The pressure sensor 10 shown in FIG. 1 is manufactured by, for example, the following manufacturing process. In the manufacture of the pressure sensor 10, first of all, an insulating-film-equipped metal material 19 shown in FIG. 2 is manufactured. In the manufacture of the insulating-film-equipped metal material 19, first of all, a stem 20 as shown in FIG. 3 is manufactured. The stem 20 is manufactured by, for example, subjecting a predetermined metal material to machining, such as pressing, cutting, and polishing. The skirt portion 28 shown in FIG. 3 can be formed by, for example, manufacturing an intermediate product in which the outer side surface 27 is connected perpendicularly to the outer bottom surface 24 and thereafter subjecting a corner of the intermediate product where the outer bottom surface 24 and the outer side surface 27 are connected to machining such as polishing.

Next, the insulating film 40 including the first layer 42 and the second layer 44 is formed on the outer surface of the stem 20, and the insulating film-equipped metal material 19 as shown in FIG. 2 is obtained.

Moreover, a functional film for forming the detection circuit 50 is formed on the insulating film 40 formed on the outer bottom surface 24 of the stem 20, and the detection circuit 50 is formed by subjecting the functional film to microfabrication with a semiconductor processing technique. The pressure sensor 10 as shown in FIG. 1 can be manufactured by fixing the stem 20 on which the insulating film 40 and the detection circuit 50 are formed to the connection member 12 or the like and forming a connection wiring 82 connecting between the substrate portion 70 and the detection circuit 50 by wire bonding or the like.

The functional film for forming the detection circuit 50 is formed on the stem 20 by any method, such as sputtering method, vacuum vapor deposition method, CVD method, and sol-gel method. The functional film is made of any material, such as semiconductors of silicon and metals with good conductivity. The formation method and material of the first layer 42 and the second layer 44 constituting the insulating film 40 are as described above.

As a patterning method for the functional film and the insulating film 40 for forming the detection circuit 50, for example, a photo patterning method, which is a semiconductor processing technique, can be used. Since the stem 20 includes the skirt portion 28 as shown in FIG. 2, it is possible to effectively prevent a problem that a resist or a thin film is ununiform at the vertical edge portion in the patterning or formation step of the functional film and the insulating film 40.

The size of the stem 20 included in the pressure sensor 10 is not limited. For example, the diameter of the outer side surface 27 shown in FIG. 2 can be 3 mm to 20 mm. The thickness of the insulating film 40 formed on the stem 20 is not limited, either. For example, the first layer 42 can have a thickness of 1-10 µm, and the second layer 42 can have a thickness of 500 nm to 100 µm. The first layer 42 and the second layer 44 may have substantially the same thickness. The first layer 42 may be thicker than the second layer 44, or the second layer 44 may be thicker than the first layer 42.

As described above, in the insulating film-equipped metal material 19 as shown in FIG. 2, the first layer 42 of the insulating film 40 can form a flat layer by filling fine irregularities on the outer surface of the stem 20, which is a metal material, and prevents the occurrence of cracking and film peeling with excellent adhesion to the outer surface of the stem 20. The insulating film-equipped metal material 19 includes a second layer 44 disposed so as to overlap with the surface of the first layer 42, and the second layer 44 has greater insulating property and moisture resistance than the first layer 42. Thus, the second layer 44 prevents deterioration of the first layer 42 (e.g., decrease in insulating property) in a high humidity environment and maintains the insulating property of the insulating film 40. Thus, the insulating film-equipped metal material 19 including the insulating film 40 having such a double-layer structure is prevented from causing cracking and film peeling and exhibits good moisture resistance.

The pressure sensor 10 (see FIG. 1) using the insulating film-equipped metal material 19 as shown in FIG. 2 ensures the insulating property between detection circuit 50 and the stem 20 and thereby has favorable durability and high reliability.

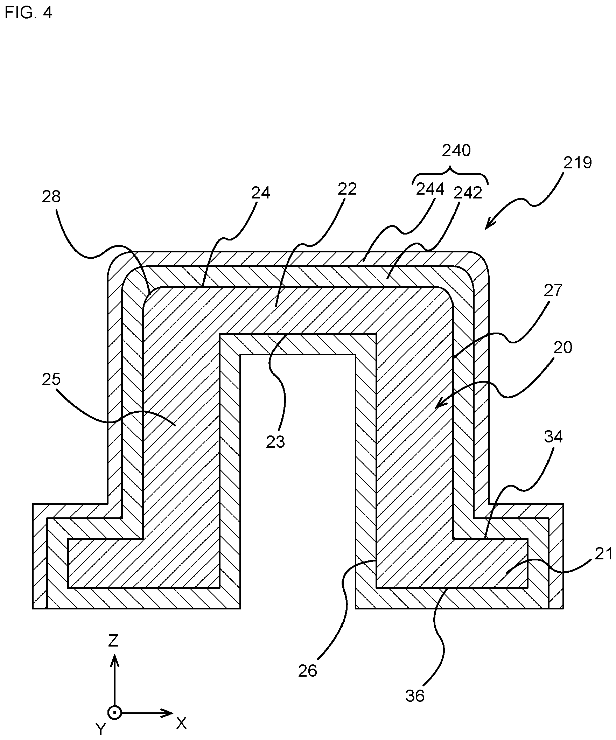

As described above, the pressure sensor according to the present invention is described with an embodiment, but needless to say, the present invention is not limited to only the above-described embodiment and may include many other embodiments and modifications. As shown in FIG. 2, the insulating film 40 may have a double-layer structure of the first layer 42 and the second layer 44 as a whole, but may partly have the double-layer structure as shown in FIG. 3 and FIG. 4.

FIG. 3 is a schematic cross-sectional view of an insulating film-equipped metal material 119 according to Second Embodiment of the present invention. Except for the shape of an insulating film 140, the insulating film-equipped metal material 119 according to Second Embodiment is similar to the insulating film-equipped metal material 19 according to First Embodiment. In the description of the insulating film-equipped metal material 119 according to Second Embodiment, only the differences from the insulating film-equipped metal material 19 according to First Embodiment are described, and the common points with First Embodiment are not described. As with the insulating film-equipped metal material 19 shown in FIG. 2, the insulating film-equipped metal material 119 can be used for pressure sensors.

As shown in FIG. 3, the insulating film-equipped metal material 119 includes the stem 20 and an insulating film 140. The insulating film 140 includes a first layer 142 directly disposed on the outer surface of the stem 20 and a second layer 144 disposed so as to at least partly overlap with the first layer 142.

As shown in FIG. 3, both of the first layer 142 and the second layer 144 are arranged on the outer surface of the stem 20, but the first layer 142 and the second layer 144 are provided in different areas. That is, the first layer 142 of the insulating film 140 is directly disposed only on the outer bottom surface 24 and the skirt portion 28 of the outer surface of the stem 20. On the other hand, the second layer 144 of the insulating film 140 is disposed so as to cover the surface of the first layer 142 and is also formed on the outer surface 27 and the stepped surface 34 of the stem 20 on which the first layer 142 is not disposed.

As described above, the first layer 142 of the insulating film 140 is disposed so as to cover the entire outer bottom surface 24 and at least a part of the skirt portion 28 and favorably prevents generation of peeling and cracking of the insulating film 140. This is because it is possible to prevent generation of peeling and cracking in the portion where stress tends to concentrate by disposing the first layer 142, which has good adhesion to the metal material, on the skirt portion 28, which has a large change rate in the surface direction, of the outer surface of the stem 20. The first layer 142 as shown in FIG. 3 can favorably be formed by, for example, spin coating method.

The detection circuit 50 shown in FIG. 1 is disposed on the outer bottom surface 24 of the stem 20 via the insulating film 140. Since the insulating film 140 has a double-layer structure of the first layer 142 and the second layer 144 on the outer bottom surface 24 of the stem 20, the portion of the insulating film 140 sandwiched between the detection circuit 50 and the stem 20 is less likely to have film peeling and cracking as compared with the portion of the insulating film 140 with only the second layer 144.

Thus, the pressure sensor using the insulating film-equipped metal material 119 ensures the insulating property between the detection circuit 50 and the stem 20 and exhibits high reliability and excellent durability. In addition, the insulating film-equipped metal material 119 according to Second Embodiment exhibits effects similar to those of the insulating film-equipped metal material 19 according to First Embodiment.

FIG. 4 is a schematic cross-sectional view of an insulating film-equipped metal material 219 according to Third Embodiment of the present invention. Except for the shape of an insulating film 240, the insulating film-equipped metal material 219 according to Third Embodiment is similar to the insulating film-equipped metal material 19 according to First Embodiment. In the description of the insulating film-equipped metal material 219 according to Third Embodiment, only the differences from the insulating film-equipped metal material 19 according to First Embodiment are described, and the common points with First Embodiment are not described. As with the insulating film-equipped metal material 19 shown in FIG. 2, the insulating film-equipped metal material 219 can be used for pressure sensors.

As shown in FIG. 4, the insulating film-equipped metal material 219 includes the stem 20 and an insulating film 240. The insulating film 240 includes a first layer 242 directly disposed on the outer surface of the stem 20 and a second layer 244 disposed so as to overlap with the first layer 242.

As shown in FIG. 3, both of the first layer 242 and the second layer 244 are arranged on the surface of the stem 20, but the first layer 242 and the second layer 244 are provided in different areas. That is, the first layer 242 of the insulating film 240 is provided so as to cover all surfaces of the stem 20 including the inner surface and the outer surface. On the other hand, the second layer 244 of the insulating film 240 is provided so as to cover a part of the surface of the first layer 242. That is, the first layer 242 is provided so as to cover the outer bottom surface 24, the skirt portion 28, the outer side surface 27, the stepped surface 34, the opening edge surface 36, the pressure receiving inner surface 23, and the inner side surface 26 of the stem 20. On the other hand, the second layer 244 is provided on the outer bottom surface 24, the skirt portion 28, the outer side surface 27, and the stepped surface 34 of the outer surface of the stem 20 via the first layer 242.

As described above, the first layer 242 of the insulating film 240 may cover the inner surface of the stem 20. The first layer 242 as shown in FIG. 4 can favorably be formed by, for example, dip coating method. The insulating film-equipped metal material 219 according to Third Embodiment exhibits effects similar to those of the insulating film-equipped metal material 19 according to First Embodiment.

Hereinafter, the present invention is described in more detail with reference to examples, but the present invention is not limited to only these examples.

### Examples

Three types of insulating films as shown below were formed on an outer surface of a stem 20 as shown in FIG. 2, and Sample 1 to Sample 3, which were insulating film-equipped metal materials, were prepared. The insulating film of each sample was as follows.

### Sample 1

The insulating film of Sample 1 had a double-layer structure of a first layer 42 and a second layer 44 formed on the outer surface of the stem 20 as in the insulating film 40 shown in FIG. 2.

### - First Layer

Layer Composition: Smectite Clay Mineral (99.5%) and Inorganic Binder (silica sol) (0.5%)
Manufacturing Method: Spin Coating Method
Thickness: 2 µm

### - Second Layer

Layer Composition: Silicon Oxide
Manufacturing Method: CVD
Thickness: 2 µm

### Sample 2

The insulating film of Sample 2 had a single-layer structure made of the same material as the first layer of Sample 1. As the metal material, the same stem as in Sample 1 was used.

### - First Layer

Layer Composition: Smectite Clay Mineral (99.5%) and Inorganic Binder (silica sol) (0.5%)
Manufacturing Method: Spin Coating Method
Thickness: 4 µm

### Sample 3

The insulating film of Sample 3 had a single-layer structure made of the same material as the second layer of Sample 1. As the metal material, the same stem as in Sample 1 was used.

### - First Layer

Layer Composition: Silicon Oxide
Manufacturing Method: CVD
Thickness: 4 µm

A fracture toughness test and a high humidity environment test were performed on Samples 1-3. The fracture toughness test was performed by the indenter press-fitting method using a Vickers indenter. In the high humidity environment test, the weight change rate after being left in an environment of humidity 93% and temperature 60°C for 1000 hours was measured. The results are shown in Table 1.

**Table 1**

| | Insulating Film | First Layer | Second Layer | Fracture Toughness Test (Mpa▪m^{1/2}) | High Humidity Environment Test Weight Change Rate (ppm) |
|---|---|---|---|---|---|
| Sample 1 | double-layer structure | clay mineral | silicon oxide | 1.8 | 4 |
| Sample 2 | single-layer structure | clay mineral | - | 2 | 50 |
| Sample 3 | single-layer structure | silicon oxide | - | 0.8 | 5 |

From Table 1, there are problems with the fracture toughness in Sample 3 and the moisture storage resistance in the high humidity environment in Sample 2. In Sample 1 with an insulating film having a double-layer structure of the first layer 42 and the second layer 44 as shown in FIG. 2, however, the insulating film exhibits good moisture resistance and can prevent generation of cracking and film peeling.

### Explanation of References

- 10: pressure sensor
- 12: connection member
- 12a: screw groove
- 12b: passage
- 14: holding member
- 19, 119, 219: insulating film-equipped metal material
- 20.: stem
- 21: flange portion
- 22: bottom wall portion (membrane)
- 23: pressure receiving inner surface
- 24: outer bottom surface
- 25: side wall portion
- 26: inner side surface
- 27: outer side surface
- 34: stepped surface
- 36: opening edge surface
- 40, 140, 240: insulating film
- 42, 142, 242: first layer
- 44, 144, 244: second layer
- 50: detection circuit
- 70: substrate portion
- 82: connection wiring

## Claims

1. An insulating film-equipped metal material comprising:
a metal material; and
an insulating film covering at least a part of a surface of the metal material,
wherein the insulating film includes:
an insulating first layer directly disposed on the surface of the metal material and formed of a coating film containing a clay mineral; and
a second layer disposed on the surface of the metal material so as to at least partly overlap with a surface of the first layer and having insulating property and moisture resistance greater than those of the first layer, and wherein
the second layer is a layer containing at least one selected from a silicon based oxide, an aluminum based oxide, a zirconium based oxide, a magnesium based oxide, a calcium based oxide, a titanium based oxide, a hafnium based oxide, a silicon based nitride, a silicon based oxynitride, and a silicon based carbide.

2. The insulating film-equipped metal material according to claim 1, wherein the clay mineral is smectite.

3. The insulating film-equipped metal material according to claim 1 or claim 2, wherein the second layer is a layer containing at least one selected from a polyimide resin, an epoxy resin, and a phenol resin.

4. An insulating film-equipped metal material comprising:
a metal material; and
an insulating film covering at least a part of a surface of the metal material,
wherein the insulating film includes:
an insulating first layer directly disposed on the surface of the metal material and formed of a coating film containing a clay mineral; and
a second layer disposed on the surface of the metal material so as to at least partly overlap with a surface of the first layer and having insulating property and moisture resistance greater than those of the first layer, and wherein
the metal material is an alloy steel containing at least one selected from chromium and nickel.

5. The insulating film-equipped metal material according to claim 4, wherein the metal material is an alloy steel containing 15-25% of chromium and 3-15% of nickel.

6. A pressure sensor comprising:
the insulating film-equipped metal material according to any of claim 1 to claim 5; and
a detection circuit disposed to the metal material so as to overlap with a surface of the insulating film,
wherein a surface of the metal material opposite to the side where the detection circuit is disposed is a pressure receiving surface for receiving pressure of fluid to be detected.

## Patentansprüche

1. Ein mit einer isolierenden Folie versehenes Metallmaterial, umfassend:
ein Metallmaterial; und
eine isolierende Folie, die mindestens einen Teil einer Oberfläche des Metallmaterials bedeckt,
wobei die isolierende Folie umfasst:
eine isolierende erste Schicht, die direkt auf der Oberfläche des Metallmaterials angeordnet ist und aus einer Beschichtungsfolie geformt ist, die ein Tonmineral enthält; und
eine zweite Schicht, die auf der Oberfläche des Metallmaterials so angeordnet ist, dass sie zumindest teilweise mit einer Oberfläche der ersten Schicht überlappt, und die eine Isoliereigenschaft und eine Feuchtigkeitsbeständigkeit aufweist, die größer sind als die der ersten Schicht, und wobei die zweite Schicht eine Schicht ist, die mindestens einen der folgenden Stoffe enthält: ein Oxid auf Siliziumbasis, ein Oxid auf Aluminiumbasis, ein Oxid auf Zirkoniumbasis, ein Oxid auf Magnesiumbasis, ein Oxid auf Calciumbasis, ein Oxid auf Titanbasis, ein Oxid auf Hafniumbasis, ein Nitrid auf Siliziumbasis, ein Oxynitrid auf Siliziumbasis und einem Carbid auf Siliziumbasis.

2. Das mit einer isolierenden Folie versehene Metallmaterial nach Anspruch 1, wobei das Tonmineral Smektit ist.

3. Das mit einer isolierenden Folie versehene Metallmaterial nach Anspruch 1 oder 2, wobei die zweite Schicht eine Schicht ist, die mindestens eines der folgenden Harze enthält: ein Polyimidharz, ein Epoxidharz und ein Phenolharz.

4. Ein mit einer isolierenden Folie versehenes Metallmaterial umfassend:
ein Metallmaterial; und
eine isolierende Folie, die mindestens einen Teil einer Oberfläche des Metallmaterials bedeckt,
wobei die isolierende Folie umfasst:
eine isolierende erste Schicht, die direkt auf der Oberfläche des Metallmaterials angeordnet ist und aus einer Beschichtungsfolie geformt ist, die ein Tonmineral enthält; und
eine zweite Schicht, die auf der Oberfläche des Metallmaterials so angeordnet ist, dass sie zumindest teilweise mit einer Oberfläche der ersten Schicht überlappt, und die eine Isoliereigenschaft und eine Feuchtigkeitsbeständigkeit aufweist, die größer sind als die der ersten Schicht, und wobei das Metallmaterial ein legierter Stahl ist, der mindestens eines der Elemente Chrom und Nickel enthält.

5. Das mit einer isolierenden Folie versehene Metallmaterial nach Anspruch 4, wobei das Metallmaterial ein legierter Stahl ist, der 15-25% Chrom und 3-15% Nickel enthält.

6. Ein Drucksensor mit:
das mit einer isolierenden Folie versehene Metallmaterial nach einem der Ansprüche 1 bis 5; und
eine Detektionsschaltung, die auf dem Metallmaterial so angeordnet ist, dass sie sich mit einer Oberfläche der isolierenden Folie überlappt,
wobei eine Oberfläche des Metallmaterials, die der Seite gegenüberliegt, auf der der die Detektionsschaltung angeordnet ist, eine Druckaufnahmefläche zur Aufnahme des Drucks der zu erkennenden Flüssigkeit ist.

## Revendications

1. Matériau métallique pourvu d'un film isolant comprenant :
un matériau métallique ; et
un film isolant recouvrant au moins une partie d'une surface du matériau métallique, le film isolant comprenant :
une première couche isolante directement disposée sur la surface du matériau métallique et formée d'un film de revêtement contenant un minéral de type argile ; et
une deuxième couche disposée sur la surface du matériau métallique de sorte à au moins partiellement chevaucher une surface de la première couche et ayant une propriété d'isolation et une résistance à l'humidité supérieures à celles de la première couche, et,
la deuxième couche étant une couche contenant au moins l'un choisi parmi un oxyde à base de silicium, un oxyde à base d'aluminium, un oxyde à base de zirconium, un oxyde à base de magnésium, un oxyde à base de calcium, un oxyde à base de titane, un oxyde à base de hafnium, un nitrure à base de silicium, un oxynitrure à base de silicium et un carbure à base de silicium.

2. Matériau métallique pourvu d'un film isolant selon la revendication 1, le minéral de type argile étant une smectite.

3. Matériau métallique pourvu d'un film isolant selon la revendication 1 ou la revendication 2, la deuxième couche étant une couche contenant au moins l'une choisie parmi une résine de polyimide, une résine époxy et une résine phénolique.

4. Matériau métallique pourvu d'un film isolant comprenant :
un matériau métallique ; et
un film isolant recouvrant au moins une partie d'une surface du matériau métallique, le film isolant comprenant :
une première couche isolante directement disposée sur la surface du matériau métallique et formée d'un film de revêtement contenant un minéral de type argile ; et
une deuxième couche disposée sur la surface du matériau métallique de sorte à au moins partiellement chevaucher une surface de la première couche et ayant une propriété d'isolation et une résistance à l'humidité supérieures à celles de la première couche, et
le matériau métallique étant un acier allié contenant au moins l'un choisi parmi le chrome et le nickel.

5. Matériau métallique pourvu d'un film isolant selon la revendication 4, le matériau métallique étant un acier allié contenant 15 à 25 % de chrome et 3 à 15 % de nickel.

6. Capteur de pression comprenant :
le matériau métallique pourvu d'un film isolant selon l'une quelconque parmi la revendication 1 à la revendication 5 ; et
un circuit de détection disposé sur le matériau métallique de sorte à chevaucher une surface du film isolant,
une surface du matériau métallique opposée au côté où le circuit de détection est disposé étant une surface réceptrice de pression pour recevoir une pression d'un fluide devant être détecté.
